# EUROPÄISCHE PATENTSCHRIFT

(11) **EP 1 910 740 B1**
(45) Veröffentlichungstag und Bekanntmachung des Hinweises auf die Patenterteilung: **17.04.2013**
(21) Anmeldenummer: 06742366.5
(22) Anmeldetag: 23.05.2006
(51) Int. Cl.: F22B 31/04

(54) **VERFAHREN UND VORRICHTUNG ZUR ERZEUGUNG VON ÜBERHITZTEM DAMPF**
METHOD AND DEVICE FOR GENERATION OF SUPERHEATED STEAM
PROCEDE ET DISPOSITIF DE PRODUCTION DE VAPEUR SURCHAUFFEE

(30) Priorität: 02.08.2005 DE 102005036792
(43) Veröffentlichungstag der Anmeldung: 16.04.2008
(73) Patentinhaber: EcoEnergy Gesellschaft für Energie- und Umwelttechnik mbH, 37445 Walkenried (DE)
(72) Erfinder: SCHU, Reinhard, 37445 Walkenried (DE)
(74) Vertreter: Vomberg, Friedhelm
(86) Internationale Anmeldenummer: PCT/DE2006/000885
(87) Internationale Veröffentlichungsnummer: WO 2007/014538

(56) Entgegenhaltungen:
- EP-A1- 0 128 252
- WO-A-95/00804
- DE-A1- 1 904 638
- FR-A1- 2 283 524
- GB-A- 727 672
- GB-A- 1 181 002

## Beschreibung

Die vorliegende Erfindung betrifft ein Verfahren zur Erzeugung von überhitztem Dampf, bei dem der aus einer ersten Stufe, nämlich einer Hauptanlage, die eine Ersatzbrennstoffverwertungsanlage, eine Müllverbrennungsanlage, eine Biomasseverbrennungsanlage oder ein Atomkraftwerk ist, entnommene Sattdampf in eine zweite Stufe, nämlich einer Nebenanlage, überführt und dort überhitzt wird.

Ferner betrifft die Erfindung eine Vorrichtung zur Durchführung des Verfahrens.

Beim Betrieb von Müllverbrennungsanlagen stand zunächst die sichere und störungsfreie Entsorgung der Abfälle bzw. des Sondermülls im Vordergrund. Erst allmählich wurden zur Vermeidung von Umweltschädigungen Versuche unternommen, die Schadstoffemission zu begrenzen. Die weltweit knapper werdenden Energievorräte führen schließlich zu Überlegungen, den im Verbrennungsgut enthaltenen Heizwert nutzbar zu machen sowie die Prozesse energetisch zu optimieren.

Die vorliegende Erfindung betrifft insbesondere Ersatzbrennstoffverwertungs- und Müllverbrennungsanlagen. Unter Ersatzbrennstoffen sollen alle Brennstoffe verstanden werden, bei denen im Rauchgas für den Kessel und die nachgeschalteten Anlagenteile korrosive und/oder zur Verschlackung neigende Rauchgasbestandteile vorhanden sind. Dies sind zum Beispiel Chlor- und Schwefelverbindungen und/oder im Schmelzpunkt reduzierte Aschen, die beispielsweise hohe Alkalianteile aufweisen können.

Die meisten Ersatzbrennstoffanlagen wurden bisher mit Dampfkesseln zur Erzeugung von Mitteldruckdampf (bis 60 bar) ausgestattet. Die Notwendigkeit zur Beschränkung des Druckes resultiert aus der bei den eingesetzten Werkstoffen verstärkt auftretenden Hochtemperaturkorrosion bei Dampftemperaturen von oberhalb 370°C bis 400°C. Die Hochtemperaturkorrosion kann dazu führen, dass die Dampfüberhitzer schon nach kurzer Betriebszeit von 3 bis 12 Monaten erneuert werden müssen. Damit der erzeugte Dampf auch hinreichend überhitzt werden kann, musste bei solchen Anlagen der Dampfdruck auf maximal 40 bis 60 bar begrenzt werden.

Die DE 19 15 852 A beschreibt ein Verfahren, in dem ein Müllkessel Sattdampf erzeugt, der in einem mit fossilen Brennstoffen befeuerten Hauptkessel, der ebenfalls mit einem Verdampfer ausgestattet ist, gemeinsam mit dem Sattdampf des Hauptkessels weiter überhitzt wird. Für die reine Überhitzung von Sattdampf aus einer Ersatzbrennanlage werden lediglich je nach Dampfdruck und Dampftemperatur nur ca. 15 % bis 40 % der Feuerungswärmeleistung des Hauptkessels erforderlich. In der genannten Druckschrift ist jedoch zur Überhitzung des in der Ersatzbrennstoffanlage erzeugten Sattdampfes ein komplettes Kraftwerk mit Verdampfer vorgesehen, was zur Folge hat, dass die Anlage zur Überhitzung nicht als Nebenanlage zur Erhöhung des exergetischen Wirkungsgrades geschaltet ist, sondern als Hauptanlage, die selbst wesentlich größer sein muss als die Ersatzbrennstoffanlage.

In der EP 0 593 999 A1 wird ein Verfahren beschrieben, in dem ein im Kessel einer Verbrennungsanlage angeordneter Verdampfer mit Speisewasser beschickt und dadurch Hochdruckdampf als Sattdampf oder Nassdampf erzeugt, der aus dem Kessel herausgeführt wird und in einem externen Überhitzer überhitzt und anschließend einer Hochdruckdampfturbine zur Stromerzeugung zugeführt wird. Allerdings wird über die Art der Dampfüberhitzung sowie den verwendeten Brennstoff in diesem Dokument nichts ausgeführt. Insbesondere wird nicht auf das Problem des Verhältnisses von Verdampferflächen in der Feuerungsanlage und Überhitzerflächen, die als externe Überhitzer dienen sollen, eingegangen.

Aus der Veröffentlichung "Studie zum Energiepotential von KVA in der Schweiz, Baudirektion Kanton Zürich, AWEL, Amt für Abfall, Wasser, Energie und Luft vom Juni 2005 wird die zur Zeit in Bau befindliche Müllverbrennungsanlage HR-AVI Amsterdam, Niederlande beschrieben. Diese Anlage soll im Betrieb einen Netto-Wirkungsgrad elektrisch von 30% aufweisen. Der Wirkungsgrad soll durch verschiedene Maßnahmen zur Erhöhung des Kesselwirkungsgrades und die im Folgenden aufgeführten Maßnahmen zur Steigerung des thermischen Turbinenwirkungsgrades gegenüber den heute betriebenen Müllverbrennungsanlagen erzielt werden:
- Reduzierung der Kondensationsdruckes
- Überhitzung des Frischdampfes auf 440°C
- Frischdampfdruck von 130 bar
- Zwischenüberhitzung mit Frischdampf, wie auch bei Atomkraftwerken üblich
- Mehrstufige Kondensatvorwärmung

Die Investitionskosten für das wirkungsgradoptimierte Projekt HR-AVI mit 30 % elektrischem Netto-Wirkungsgrad liegen ca. 20 % - 30 % über den Kosten herkömmlicher Müllverbrennungsanlagen mit 22 % - 26 % elektrischem Netto-Wirkungsgrad. Aufgrund der Optimierungen wird ein drastischer Anstieg der Überhitzerkorrosion erwartet, so dass die entsprechenden Krananlagen für den schnellen Austausch der Überhitzerbündel als Verschleißteile bereits berücksichtigt wurden. Den größten Anteil der Maßnahmen zur Wirkungsgradsteigerung gegenüber herkömmlichen Müllverbrennungsanlagen hat die erhöhte Frischdampftemperatur und die Zwischenüberhitzung ergeben, die jedoch mit dem in dieser Veröffentlichung angegeben Maßnahmen ausgeschöpft sind.

Atomkraftwerke mit dem Moderator Wasser als Druckwasser- oder Siedewasserreaktor können mit der Energie aus der Kernspaltung aus technischen Gründen keine wesentliche Frischdampfüberhitzung durchführen. Lediglich eine Zwischenüberhitzung mit Frischdampf kann durchgeführt werden. Bei vollständigen Dampferzeugeranlagen als externe Überhitzer für Atomkraftwerke ist jedoch der für die externe Überhitzung von Sattdampf verbleibende Energieanteil so gering, dass vollständige Großkraftwerke in vergleichbarer Größenordnung wie das Kernkraftwerk selbst erforderlich wären.

In der WO 95/00408 wird eine Müllverbrennungsanlage mit einer Kühler zur Erzeugung von überhitztem Dampf beschrieben. Der Kühler dient der Abkühlung eines zirkulierenden Materials, wobei überhitzter Dampf erzeugt wird. Das abgekühlte zirkulierende Material wird in einen Brennofen gegeben, wo es sich mit den aufsteigenden Rauchgasen durchmischt und dabei erhitzt wird. In einem Abscheider werden Abgas und zirkulierendes Material wieder getrennt, wonach das erhitzte zirkulierende Material in den Kühler zurückgeführt wird, um dort für die Erzeugung von überhitztem Dampf zur Verfügung zu stehen. Der hierzu erforderliche Dampf wird in der Anlage selbst erzeugt und dem Kühler zugeführt.

Aus der GB 727672 ist ein Verfahren zur Erzeugung von überhitztem Dampf bekannt, wobei der einer Hauptanlage entnommene Satt- oder Nassdampf einer Nebenanlage zugeführt und dort überhitzt wird, die ein Öl- oder Kohleofen ist.

Es ist Aufgabe der vorliegenden Erfindung, eine effiziente Überhitzung von Sattdampf aus Ersatzbrennstoffanlagen oder Atomkraftwerken mit dem Ziel der Erhöhung des elektrischen Wirkungsgrades zu ermöglichen.

Diese Aufgabe wird durch das Verfahren nach Anspruch 1 sowie die Vorrichtung nach Anspruch 9 gelöst.

Erfindungsgemäß wird die Dampfüberhitzung in Abhängigkeit von der Dampfproduktion von der ersten Stufe geregelt und die Nebenanlage ist als zirkulierende Wirbelschichtfeuerung mit Fließbettkühler ausgeführt, wobei als Brennstoff der Nebenanlage homogener Brennstoff, nämlich Braunkohle, Steinkohle, Erdgas oder Erdöl eingesetzt wird. Durch die Trennung der Erzeugung des Sattdampfes mit hohem Druck, vorwiegend in der Hauptanlage, und der Überhitzung des Sattdampfes, die vorwiegend in der Nebenanlage durchgeführt wird, ergeben sich eine Reihe von Vorteilen gegenüber dem Stand der Technik. In der ersten Stufe werden vorzugsweise Müll, Biomassen oder Ersatzstoffe verbrannt, wobei mit der freigesetzten Wärme Wasser verdampft wird. Die Nebenanlage wird vorzugsweise erfindungsgemäß mit einem Brennstoff betrieben, bei dem ein Rauchgas mit nur geringem Korrosions- und Verschlackungspotential erzeugt wird. Nach der erfindungsgemäßen Ausgestaltung der Erfindung ist die Nebenanlage als zirkulierende Wirbelschichtfeuerung (ZWS) mit Fließbettkühler (FBK) ausgeführt. Die Kombination beider Feuerungsanlagen mit unterschiedlichen Brennstoffen erfolgt durch ein im Kreislauf geführtes Medium, das vorzugsweise Wasser ist. Die Haupt- und die Nebenanlagen sind erfindungsgemäß über einen Wasser-Dampfkreislauf miteinander verbunden. Diese wärmetechnische Kopplung zwischen der Hauptanlage als Verdampfer und der Nebenanlage als externem Überhitzer, hat gegenüber den bisher bekannten Verfahren den Vorteil, dass die Nebenanlage als Überhitzer ohne wesentlichen Verdampferanteil betrieben werden kann und die Investitionskosten und Brennstoffkosten für den edleren Brennstoff der Nebenanlage im Vergleich zur Hauptanlage minimiert werden. Die erfindungsgemäße Kopplung der beiden Anlagen hat weiterhin den Vorteil, dass die durch den meist schlecht dosierbaren heterogenen Brennstoff der Hauptanlage verursachten Lastschwankungen der Dampferzeugung über die gute Dosierung des homogenen Brennstoff der Nebenanlage so geregelt werden kann, dass die Eingangstemperatur des Frischdampfes und des überhitzten Dampfes zur Dampfturbine nach den Ansprüchen der Dampfturbine geregelt werden kann, wodurch der Verschleiß der Turbine durch Temperaturspannungen minimiert und der automatisierte Betrieb vereinfacht werden kann.

Hauptanlagen im Sinne der vorliegenden Erfindung sind Ersatzbrennstoffverwertungsanlagen, Müllverbrennungsanlagen und Biomasseverbrennungsanlagen mit Biomassen, die im Rauchgas korrosive oder den Ascheschmelzpunkt erniedrigende Bestandteile enthalten. Ferner können Hauptanlagen auch Atomkraftwerke, Druckwasser- oder Siedewasserreaktoren sein, die aufgrund des Moderators Wasser keine wesentliche Dampfüberhitzung zulassen.

Die zirkulierende Wirbelschichtfeuerung mit dem Fließbettkühler benötigt im wesentlichen keinen Verdampfungsteil. Technologiebedingt sind die Temperaturen der zirkulierenden Wirbelschichtfeuerung in allen Bereichen kleiner als 900°C. Der Feuerraum wird nach einer Weiterbildung der Erfindung nicht als gekühlter Reaktor ausgeführt, vielmehr erfolgt die Kühlung des Feuerraums indirekt über die vom Fließbettkühler rückgeführten und gekühlten Zirkulationsaschen. Der Fließbettkühler ist als Überhitzer ausgeführt, wobei der Wärmeübergang im Fließbettkühler als Feststoff-Dampfüberhitzer wesentlich effektiver ist als bei herkömmlichen Rauchgas-Dampfüberhitzern. Dadurch ergeben sich für die Überhitzung geringere Wärmetauschergrößen und Investitionskosten.

Wie prinzipiell nach dem Stand der Technik bekannt, wird dem Fließbettkühler Frischluft als Fluidisierungsmittel zugeführt, wodurch die Gefahr von Korrosionsschäden auch bei gering korrosiven Rauchgasen der Nebenanlage entsprechend minimiert wird. Durch die Zugabe von Fluidisierungsluft im Bereich des Ascheeintrags in den Fließbettkühler wird die Asche soweit gekühlt, dass die Temperaturen der Überhitzer im Fließbettkühler den Materialeigenschaften angepasst werden können. Im hocheffektiven Fließbettkühler als Überhitzer und Zwischenüberhitzer können je nach Brennstoff der Nebenanlage ca. 60 % bis 85 % der zur Überhitzung und der Zwischenüberhitzung des Sattdampfes erforderlichen Überhitzungsenergie eingebracht werden. Als Brennstoff der Nebenanlage kann Braunkohle, Steinkohle, Erdgas oder Öl eingesetzt werden, aber auch andere Brennstoffe mit geringem Korrosions- und Verschlackungspotential, soweit eine hinreichende Homogenität gegeben ist.

Das Rauchgas aus der zirkulierenden Wirbelschichtfeuerung gelangt bei Temperaturen von 850°C bis 900°C in den Abhitze-Überhitzer. Bei diesen Temperaturen können abhängig vom Brennstoff und der Materialwahl der Überhitzerbündel vorzugsweise Zwischenüberhitzer eingesetzt werden. Sofern die Temperatur vor der Überhitzung auf < 800°C gesenkt werden muss, geschieht dies durch Rauchgasrezirkulation, vorgeschaltete Economizer oder Verdampfer. Bei guten Brennstoffen und entsprechender Materialwahl ist dies gerade bei den Zwischenüberhitzern direkt nach dem Hochdruckteil der Turbine bei Drücken von 15 bis 40 bar nicht erforderlich. Durch das Fehlen des Economizers, der sich in der Hauptanlage befindet, ist nach Abkühlung durch den Abhitze-Überhitzer ein Luftvorwärmer erforderlich, um die Rauchgase auf Temperaturen unter 200°C abzukühlen. Die vorgeheizte Frischluft gelangt in die zirkulierende Wirbelschichtverbrennung und erhöht damit die adiabate Verbrennungstemperatur, infolgedessen steigt der zu übertragende Wärmeanteil des Fließbettkühlers.

Nach einer weiteren Ausgestaltung der Erfindung werden in der Nebenanlage zwei Fließbettkühler verwendet, von denen einer zur Überhitzung und der andere zur Speisewasservorwärmung und Verdampfung im Fall des Stillstandes der Hauptanlage, als Anfahrkessel und/oder Regelgröße verwendet wird.

Vorzugsweise werden die Rauchgase aus der Nebenanlage mit den Rauchgasen aus der Hauptanlage zumindest teilweise gemeinsam gereinigt und über einen gemeinsamen Kamin abgeführt.

Wie bereits vorstehende erwähnt, wird zur Durchführung des Verfahrens eine Vorrichtung verwendet, bei der der in einer Hauptanlage erzeugte Satt- oder Nassdampf in eine Dampferzeugertrommel und von dort in eine separat regelbare Nebenanlage geführt, die eine verdampferfreie Vorrichtung zur zirkulierenden Wirbelschichtverbrennung mit Fließbettkühlung aufweist. In der Nebenanlage ist vorzugsweise zusätzlich zur Frischdampfüberhitzung ein weiterer Abhitze-Überhitzer zur Zwischenüberhitzung vorgesehen, wobei der oder die Überhitzer der Nebenanlage mit einer Turbine zur Stromerzeugung verbunden sind.

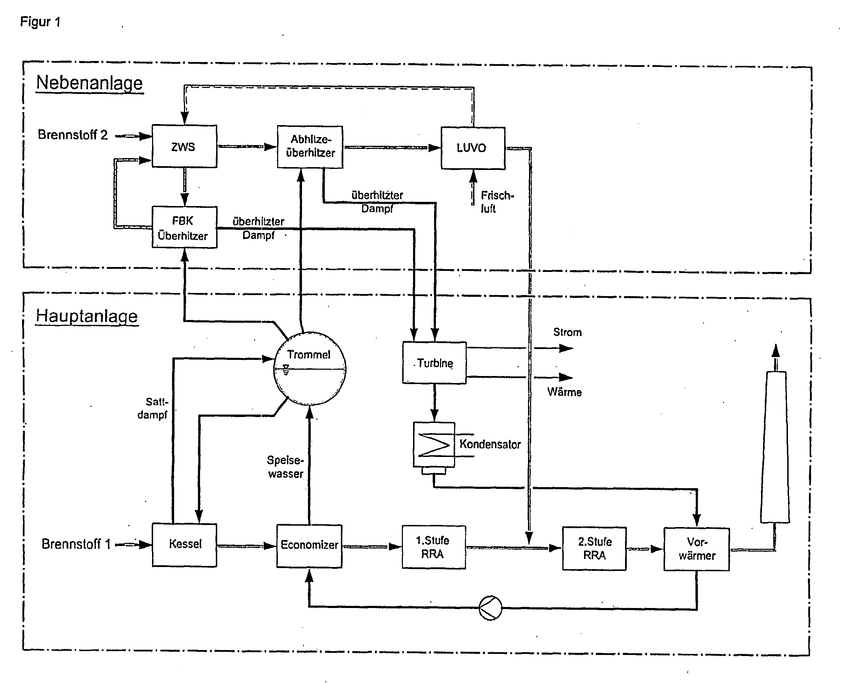

Weitere Ausgestaltungen der Erfindung sowie hiermit erzielbare Vorteile werden anhand der Zeichnung erläutert, die den Aufbau der Vorrichtung schematisch darstellt. Wie aus der Zeichnung zu erkennen, werden in der Hauptanlage und in der Nebenanlage unterschiedliche Brennstoffe verwendet. Die Kopplung der beiden Anlagen erfolgt über eine Trommel zur Dampferzeugung, in die der in der Hauptanlage entstehende Sattdampf überführt und von dort aus in die Nebenanlage geführt wird, wo er überhitzt wird. Im Kessel der Hauptanlage, der mit einem Brennstoff 1 befeuert wird, wird der Sattdampf erzeugt, der sich in der Trommel sammelt. Das dazu notwendige Speisewasser wird im Economizer über das entstehende Rauchgas vorgeheizt und in die Dampftrommel befördert. Das Rauchgas aus dem Kessel durchläuft im folgenden eine erste Stufe der Rauchgasreinigungsanlage (RRA), die zum Beispiel aus einem Sprühabsorber mit zugehöriger Kalklöschanlage bestehen kann.

Aus der ersten Stufe der Rauchgasreinigungsanlage werden die Rauchgase in die zweite Stufe der Rauchgasreinigungsanlage geführt, wobei entsprechend der Darstellung die Rauchgase der Nebenanlage beigegeben und in der zweiten Stufe gereinigt werden. In dieser Stufe können beispielsweise Additive zur Rauchgasreinigung, wie zum Beispiel Ca(OH)2/HOK, zugegeben und das Rauchgas entstaubt werden. Nach der zweiten Stufe wird die Restwärme und teilweise Kondensationswärme des Rauchgases in einem Kondensatvorwärmer genutzt, bevor das Rauchgas über einen Kamin an die Atmosphäre abgegeben wird. Über eine Frischluftvorwärmung für die Hauptanlage kann das Rauchgas zusätzlich weiter abgekühlt und der Kesselwirkungsgrad erhöht werden. Das anfallende Kondensatwasser kann für die Rauchgasreinigung und/oder als Zulauf für die Speisewasseraufbereitung genutzt werden.

Aus der Trommel wird der Nassdampf oder Sattdampf in die Nebenanlage geführt, in der ein Brennstoff 2 in einer zirkulierenden Wirbelschicht (ZWS) verbrannt wird. Die dabei entstehende Wärme wird über den Fließbettkühler (FBK-Überhitzer) und dem Abhitze-Überhitzer an den Sattdampf aus der Hauptanlage übergeben. Der so überhitzte Dampf wird zur Energieerzeugung an eine Turbine gegeben. Das Kondensat gelangt über den bereits erwähnten Vorwärmer zurück zur Speisewasserpumpe. Um das Rauchgas der Nebenanlage in der zweiten Stufe der Rauchgasreinigung behandeln zu können, muss das Rauchgas abgekühlt werden, wozu ein Luftvorwärmer (LUVO) verwendet wird, der die Verbrennungsluft der ZWS vorheizt.

## Patentansprüche

1. Verfahren zur Erzeugung von überhitztem Dampf, bei dem der aus einer ersten Stufe, nämlich einer Hauptanlage, die eine Ersatzbrennstoffverwertungsanlage, eine Müllverbrennungsanlage, eine Biomasseyerbrennungsanlage oder ein Atomkraftwerk ist, entnommene Sattdampf in eine zweite Stufe, nämlich eine Nebenanlage, überführt und dort überhitzt wird, wobei
die Dampfüberhitzung in Abhängigkeit von der Dampfproduktion der ersten Stufe geregelt wird und die Nebenanlage als zirkulierende Wirbelschichtfeuerung mit Fließbettkühler ausgeführt ist, **dadurch gekennzeichnet, dass** als Brennstoff der Nebenanlage homogener Brennstoff, nämlich Braunkohle, Steinkohle, Erdgas oder Erdöl eingesetzt wird.

2. Verfahren nach Anspruch 1, **dadurch gekennzeichnet, dass** in der ersten Stufe Müll, Biomassen oder Ersatzstoffe verbrannt werden, wobei mit der freigesetzten Wärme Wasser aufgeheizt und verdampft wird und/oder dass die erste und die zweite Stufe durch ein im Kreislauf geführtes Medium, vorzugsweise Wasser, miteinander gekoppelt sind.

3. Verfahren nach einem der Ansprüche 1 oder 2, **gekennzeichnet durch** eine zirkulierende Wirbelschichtverbrennung (ZWS) oder eine zirkulierende Wirbelschichtvergasung in der zweiten Stufe, wobei vorzugsweise das zirkulierende Bettmaterial vorwiegend mit Dampf indirekt gekühlt wird.

4. Verfahren nach Anspruch 3, **dadurch gekennzeichnet, dass** die Dampfüberhitzung im wesentlichen über die Wärme aus dem zirkulierenden Bettmaterial mit Feststoffüberhitzern und eine Zwischenüberhitzung bei niedrigeren Drücken über einen Rauchgasüberhitzer erfolgt.

5. Verfahren nach Anspruch 3, **gekennzeichnet durch** zwei Fließbettkühler (FFK), von denen einer zur Überhitzung und der andere zur Verdampfung inklusive Speisewasservorwärmung im Fall des Stillstandes der Hauptanlage, als Anfahrkessel und Regelgröße verwendet wird.

6. Verfahren nach einem der Ansprüche 1 bis 5, **dadurch gekennzeichnet, dass** die Rauchgase aus der Nebenanlage mit den Rauchgasen aus der Hauptanlage zumindest teilweise gemeinsam gereinigt, über einen Kamin abgeführt werden und/oder dass neben der Überhitzung des Frischdampfes mindestens eine Zwischenüberhitzung in der Nebenanlage durchgeführt wird.

7. Verfahren nach einem der Ansprüche 1 bis 6, **dadurch gekennzeichnet, dass** in der Nebenanlage die zur Überhitzung erforderlichen Rauchgastemperaturen ≤ 900°C durch Rauchgaszirkulation erzeugt werden und/oder dass die Rauchgase in der Nebenanlage nach der Abkühlung durch den Überhitzer weiter durch einen Luftvorwärmer (LUVO) gekühlt werden.

8. Verfahren nach einem der Ansprüche 1 bis 6, **dadurch gekennzeichnet, dass** die Rauchgase mittels Kondensatvorwärmung bis zum Wassertaupunkt gekühlt werden, wobei das anfallende Kondensatwasser für die Rauchgasreinigung und/oder als Zulauf für die Speisewasseraufbereitung genutzt werden kann.

9. Vorrichtung zur Durchführung des Verfahrens nach einem der Ansprüche 1 bis 8, wobei in einer Hauptanlage, die eine Ersatzbrennstoffverwertungsanlage, eine Müllverbrennungsanlage, eine Biomasseverbrennungsanlage oder ein Atomkraftwerk ist, der in einem Brennkessel erzeugte Sattdampf in eine Dampferzeugertrommel und von dort in eine separat regelbare Nebenanlage führbar ist, die eine verdampferfreie Vorrichtung zur zirkulierenden Wirbelschichtverbrennung mit Fließbettkühlung aufweist **dadurch gekennzeichnet, dass** die Nebenanlage so ausgelegt ist, dass als Brennstoff der Nebenanlage homogener Brennstoff, nämlich Braunkohle, Steinkohle, Erdgas oder Erdöl eingesetzt wird.

10. Vorrichtung nach Anspruch 9, **dadurch gekennzeichnet, dass** in der Nebenanlage zusätzlich zur Frischdampfüberhitzung ein weiterer Abhitze-Überhitzer vorgesehen ist und/oder dass der oder die Überhitzer der Nebenanlage mit einer Turbine verbunden sind.

## Claims

1. Process for generating superheated steam, in which the saturated steam taken from a first stage, namely a main plant which is a substituted fuel utilization plant, a waste incineration plant, a biomass combustion plant or an atomic power station is transferred to a second stage, namely a secondary plant, and is superheated there, wherein the superheating of the steam is regulated as a function of the steam production of the first stage and the secondary plant is configured as a circulating fluidized-bed furnace with fluidized-bed cooler, **characterized in that** homogeneous fuel, namely brown coal, hard coal, natural gas or petroleum, is used as fuel for the secondary plant.

2. Process according to Claim 1, **characterized in that** waste, biomasses or substitute materials are burnt in the first stage, with water being heated and vaporized by means of the heat liberated and/or **in that** the first and second stages are coupled by means of a circulated medium, preferably water.

3. Process according to either Claim 1 or 2, **characterized by** a circulating fluidized-bed combustion (ZWS) or a circulating fluidized-bed gasification in the second stage, with the circulating bed material preferably being predominantly cooled indirectly by means of steam.

4. Process according to Claim 3, **characterized in that** the superheating of the steam is effected essentially by means of the heat from the circulating bed material using solids superheaters and intermediate superheating is effected at lower pressures by means of a flue gas superheater.

5. Process according to Claim 3, **characterized by** two fluidized-bed coolers (FFK) of which one is used for superheating and the other is used as start-up boiler and regulated variable for vaporization including feed water preheating in the case of the main plant being down.

6. Process according to any of Claims 1 to 5, **characterized in that** the flue gases from the secondary plant are purified at least partly together with the flue gases from the main plant, discharged via a stack and/or **in that** at least one intermediate superheating in addition to the superheating of the fresh steam is carried out in the secondary plant.

7. Process according to any of Claims 1 to 6, **characterized in that**, in the secondary plant, the flue gas temperatures of ≤ 900°C required for superheating are generated by flue gas circulation and/or **in that** the flue gases in the secondary plant are, after cooling by means of the superheater, cooled further by means of an air preheater (LUVO).

8. Process according to any of Claims 1 to 6, **characterized in that** the flue gases are cooled by means of condensate preheating to the dew point of water, with the condensate water obtained being able to be utilized for flue gas purification and/or as feed to the feed water treatment.

9. Apparatus for carrying out the process according to any of Claims 1 to 8, wherein, in a main plant, which is a substituted fuel utilization plant, a waste incineration plant, a biomass combustion plant or an atomic power station, the saturated steam produced in a boiler can be conveyed into a steam generation drum and from there into a separately regulable secondary plant which has a vaporization-free apparatus for circulating fluidized-bed combustion with fluidized-bed cooling, **characterized in that** the secondary plant is configured so that homogeneous fuel, namely brown coal, hard coal, natural gas or petroleum, is used as fuel for the secondary plant.

10. Apparatus according to Claim 9, **characterized in that** a further waste heat superheater is additionally provided for fresh steam superheating in the secondary plant and/or **in that** the superheater or heaters of the secondary plant is/are connected to a turbine.

## Revendications

1. Procédé de génération de vapeur surchauffée, dans lequel la vapeur saturée prélevée dans un premier étage, à savoir une installation principale qui est une installation de valorisation de combustibles de substitution, une installation d'incinération des déchets, une installation d'incinération de biomasse ou une centrale nucléaire, est transférée à un deuxième étage, à savoir une installation secondaire, et y est surchauffée, dans lequel la surchauffe de la vapeur est réglée en fonction de la production de vapeur dudit premier étage et ladite installation secondaire est réalisée en tant que combustion en lit fluidisé circulant à refroidisseur à lit fluidisé,
**caractérisé par le fait que** l'on utilise un combustible homogène, à savoir le lignite, la houille, le gaz naturel ou le pétrole, en tant que combustible de ladite installation secondaire.

2. Procédé selon la revendication 1, **caractérisé par le fait que** des déchets, des biomasses ou des produits de substitution sont incérés dans ledit premier étage, de l'eau étant chauffée et évaporée à l'aide de la chaleur dégagée, et/ou que lesdits premier et deuxième étages sont couplés entre eux par un milieu, de préférence de l'eau, que l'on fait circuler.

3. Procédé selon l'une quelconque des revendications 1 ou 2, **caractérisé par** une combustion sur lit fluidisé circulant (ZWS) ou une gazéification en lit fluidisé circulant dans ledit deuxième étage, de préférence, la matière circulante de lit étant refroidie indirectement, pour la plupart, par vapeur.

4. Procédé selon la revendication 3, **caractérisé par le fait que** la surchauffe de la vapeur se fait pour l'essentiel par la chaleur en provenance de la matière circulante de lit, avec des surchauffeurs à matière solide et une surchauffe intermédiaire est réalisée à des pressions faibles par un surchauffeur à gaz de fumée.

5. Procédé selon la revendication 3, **caractérisé par** deux refroidisseurs à lit fluidisé (FBK) dont l'un est utilisé pour la surchauffe et l'autre pour l'évaporation, y compris le préchauffage d'eau d'alimentation en cas d'arrêt de l'installation principale, en tant que chaudière de démarrage et grandeur réglée.

6. Procédé selon l'une quelconque des revendications 1 à 5, **caractérisé par le fait que** les gaz de fumée provenant de ladite installation secondaire sont purifiés, au moins en partie, conjointement avec les gaz de fumée provenant de l'installation principale, sont évacués par une cheminée, et/ou que, outre la surchauffe de la vapeur vive, au moins une surchauffe intermédiaire est réalisée dans l'installation secondaire.

7. Procédé selon l'une quelconque des revendications 1 à 6, **caractérisé par le fait que**, dans l'installation secondaire, les températures de gaz de fumée ≤ 900 °C nécessaires à la surchauffe sont générées par circulation de gaz de fumée et/ou que les gaz de fumée sont refroidis, dans l'installation secondaire, après le refroidissement par ledit surchauffeur, encore par un préchauffeur d'air (LUVO)

8. Procédé selon l'une quelconque des revendications 1 à 6, **caractérisé par le fait que** les gaz de fumée sont refroidis au moyen d'un préchauffage de condensat jusqu'au point de rosée d'eau, l'eau de condensat produite pouvant être utilisée pour la purification des gaz de fumée et/ou comme affluent pour le traitement de l'eau d'alimentation.

9. Dispositif de mise en oeuvre du procédé selon l'une quelconque des revendications 1 à 8, dans lequel, dans une installation principale qui est une installation de valorisation de combustibles de substitution, une installation d'incinération des déchets, une installation d'incinération de biomasse ou une centrale nucléaire, la vapeur saturée générée dans une chaudière de combustion peut être menée dans un tambour de génération de vapeur et de là dans une installation secondaire qui est indépendamment réglable et qui comprend un dispositif exempt d'évaporation pour la combustion en lit fluidisé circulant, à refroidissement par lit fluidisé, **caractérisé par le fait que** ladite installation secondaire est réalisée de manière à ce que l'on utilise, en tant que combustible de l'installation secondaire, un combustible homogène, à savoir le lignite, la houille, le gaz naturel ou le pétrole.

10. Dispositif selon la revendication 9, **caractérisé par le fait que**, en plus de la surchauffe de vapeur vive, un autre surchauffeur de chaleur perdue est prévu dans ladite installation secondaire et/ou que le ou les surchauffeur(s) de l'installation secondaire est/sont connecté(s) à une turbine.
